# EUROPEAN PATENT APPLICATION

(11) **EP 4 786 255 A1**
(43) Date of publication of application: **05.08.2026**
(21) Application number: 24870506.3
(22) Date of filing: 14.09.2024
(51) Int. Cl.: B60L 50/64, H01M 50/244

(54) **BATTERY PACK AND ELECTRIC DEVICE**

(30) Priority: 25.09.2023 CN 202311256856
(71) Applicant: BYD Company Limited, Shenzhen, Guangdong 518118 (CN)
(72) Inventor: MA, Ningbo, Shenzhen, Guangdong 518118 (CN); LI, Dongsheng, Shenzhen, Guangdong 518118 (CN); SHA, Yuan, Shenzhen, Guangdong 518118 (CN); ZHENG, Qingshuo, Shenzhen, Guangdong 518118 (CN)
(74) Representative: Taor, Simon Edward William
(86) International application number: PCT/CN2024/119194
(87) International publication number: WO 2025/066962

(57) **Abstract**

A battery pack and an electric device. The battery pack comprises: batteries (1) and a power distribution assembly (2); a tray (31), the tray being provided with a first cavity (301) having one end open, and the batteries being provided in the first cavity, and an upper cover (32), the upper cover covering the tray, the upper cover being provided with, in a first direction, a protruding portion (321) protruding upward and extending in a second direction, and the protruding portion being provided with a second cavity (302) in communication with the first cavity, the power distribution assembly being arranged in the second cavity, the length size of the protruding portion in the second direction being L1, the length direction of the battery pack in the second direction being L2, and the relational expression L1≥1/2*L2 being satisfied. The electric device comprises the battery pack. The power distribution assembly is arranged above the tray and is made longer in the length direction, so that the spare space of a vehicle is fully utilized, improving the passenger experience.

## Description

### CROSS-REFERENCE TO RELATED APPLICATIONS

This application claims priority to Chinese patent application No. 202311256856.0, filed by BYD Company Limited on September 25, 2023, and entitled "BATTERY PACK AND ELECTRIC APPARATUS", which is incorporated herein by reference in its entirety.

### TECHNICAL FIELD

This application relates to the field of battery technologies, and in particular, to a battery pack and a battery.

### BACKGROUND

In a related technology, an improper arrangement position of a power distribution component in a battery pack affects assembly of the battery pack, resulting in the battery pack being unable to fully match a vehicle body and affecting space utilization of a vehicle.

### SUMMARY OF THE INVENTION

This application is intended to resolve one of technical problems in a related technology to at least some extent.

An objective of this application is to provide a battery pack with high space utilization.

A battery pack according to an embodiment of a first aspect of this application includes: a battery and a power distribution component; a tray, where the tray is provided with a first cavity open to an upper side, and the battery is disposed in the first cavity; an upper cover, where the upper cover covers the tray, a middle portion of the upper cover in a first direction is provided with a protrusion portion that upwardly protrudes and extends in a second direction, the protrusion portion is provided with a second cavity in communication with the first cavity, the power distribution component is disposed in the second cavity, a length dimension of the protrusion portion in the second direction is L1, and a length direction of the battery pack in the second direction is L2, satisfying a relational expression: L1≥1/2L2.

In this application, a vehicle body structure of the vehicle is analyzed, so that the power distribution component is mounted above the tray, and therefore spare space of the vehicle is fully utilized. Arranging the power distribution component with a longer dimension in the length direction reduces a dimension of the power distribution component in a vertical direction, so that larger Z-direction spacing is caused between the protrusion portion of the battery pack and the vehicle body, improving safety, and enhancing passenger experience.

An electric apparatus according to an embodiment of a second aspect of this application includes the foregoing battery pack.

Additional aspects and advantages of this application are set forth in part in the following description, and in part become apparent from the following description, or may be learned through the practice of this application.

### BRIEF DESCRIPTION OF DRAWINGS

FIG. 1 is a diagram of a structure of a battery pack according to an embodiment of this application;
FIG. 2 is a top view of a battery pack according to an embodiment of this application;
FIG. 3 is a diagram 1 of assembly of a power distribution component according to an embodiment of this application;
FIG. 4 is a diagram 2 of assembly of a power distribution component according to an embodiment of this application;
FIG. 5 is a cross-sectional view of a battery pack according to an embodiment of this application;
FIG. 6 is a side view of a power distribution component according to an embodiment of this application; and
FIG. 7 is a top view of a power distribution component according to an embodiment of this application.

### DESCRIPTION OF EMBODIMENTS

Embodiments of this application are described in detail below, examples of which are shown in the accompanying drawings, where same or similar reference numerals throughout represent same or similar elements or elements having same or similar functions. The embodiments described below with reference to the accompanying drawings are exemplary and are intended to explain this application, and shall not be construed as a limitation on this application.

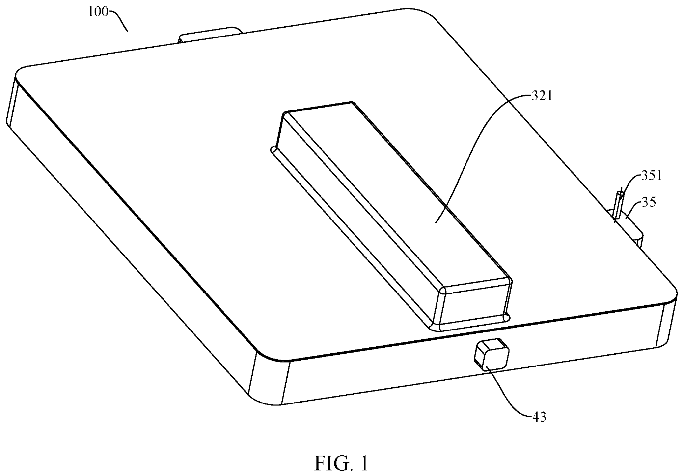

A battery pack 100 according to an embodiment of this application is described below with reference to FIG. 1 to FIG. 7.

A battery pack 100 according to an embodiment of this application includes: a battery 1, a power distribution component 2, a tray 31, and an upper cover 32.

The tray 31 is provided with a first cavity 301 having an open end. The battery 1 is arranged in the first cavity 301. The upper cover 32 covers the tray 31, and a middle portion of the upper cover 32 in a first direction is provided with a protrusion portion 321 that upwardly protrudes and extends in a second direction, the protrusion portion 321 is provided with a second cavity 302 in communication with the first cavity 301, and the power distribution component 2 is disposed in the second cavity 302, so that the power distribution component 2 is arranged in an upper region of a middle portion of the battery pack 100.

The power distribution component 2 may include a plurality of working modules, such as a DC module, a CCU module, and an FMCU module. The plurality of working modules in the power distribution component 2 may be directly arranged in a space region defined by the second cavity 302 formed in the upper cover 32. Certainly, the plurality of functional modules in the power distribution component 2 may alternatively be arranged in the second cavity 302 after being uniformly assembled and forming a power distribution box.

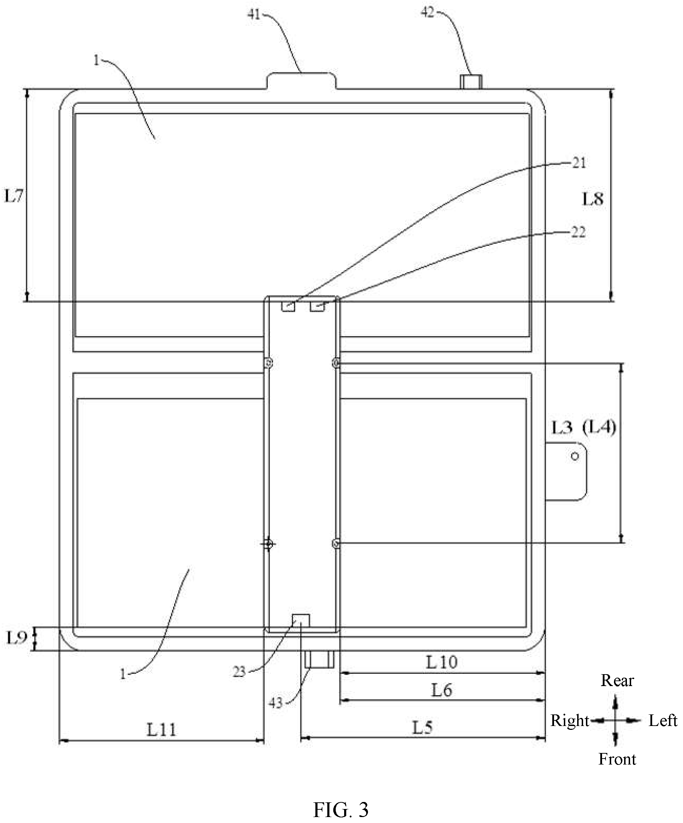

The "First direction" is a width direction of the battery pack 100, which is also a left-right direction shown in FIG. 3. The "Second direction" is a length direction of the battery pack 100, which is also a front-rear direction shown in FIG. 3.

The "First direction" may also be a length direction or a height direction of the battery pack 100, and the "second direction" may also be a height direction or a width direction of the battery pack, that is, the first direction and the second direction are perpendicular to each other. In this application, description is performed using an example in which the "first direction" is the width direction of the battery pack 100 and the "second direction" is the length direction of the battery pack 100. When the battery pack 100 is applied to a vehicle, the first direction of the battery pack 100 is parallel to one of an X-direction, a Y-direction, and a Z-direction of the vehicle, and the second direction of the battery pack 100 is parallel to the other of the X-direction, the Y-direction, and the Z-direction of the vehicle. For example: the first direction is parallel to the X direction, and the second direction is parallel to the Y direction. Here, the X direction refers to a width direction of the vehicle, the Y direction refers to a heading direction of the vehicle, and the Z direction refers to a height direction of the vehicle.

The battery pack 100 in this application can be applied to an electric apparatus (such as a vehicle). By designing a mounting position of a power distribution case above the tray 31 (namely in the second cavity 302), spare space of the vehicle can be effectively utilized, and arrangement of battery cells in the tray 31 can be ensured, so that space for arranging the power distribution case can be saved in the tray 31, and more batteries 1 can be arranged in this space, which improves energy storage of the battery pack 100 and increases a driving range of the vehicle.

Space for accommodating the battery 1 and the power distribution component 2 is jointly defined by the tray 31 and the upper cover 32. There are a plurality of batteries 1. The plurality of batteries 1 are arranged in the first cavity 301 of the tray 31, and space for accommodating the power distribution component 2 (namely the second cavity 302) is formed between the upper cover 32 and the batteries 1. The second cavity 302 is formed by the protrusion portion 321, so that the power distribution component 2 can be arranged above the batteries 1, which improves space utilization of the vehicle in a vertical direction and adaptively reduces space occupied by the battery pack 100 in a horizontal direction.

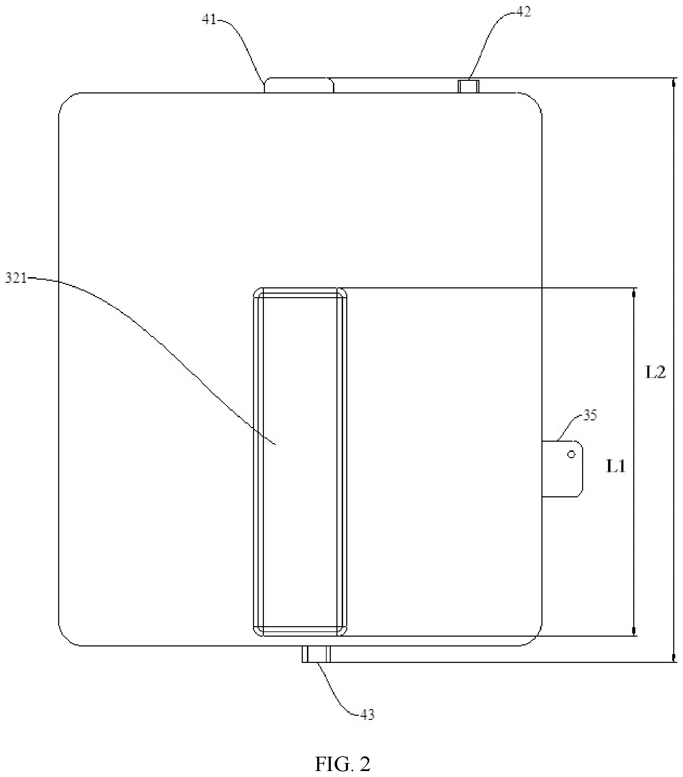

Refer to FIG. 2. A length dimension of the protrusion portion 321 in the second direction is L1, and a length direction of the battery pack 100 in the second direction is L2, satisfying a relational expression: L1≥1/2L2.

Refer to FIG. 2. It can be learned that the protrusion portion 321 extends rearward from a front end of the upper cover 32 to form the second cavity 302 for accommodating the power distribution component 2. When a dimension of the second cavity 302 in the battery pack 100 satisfies the foregoing parameter range, sufficient space can be reserved above the battery pack 100 for arranging the power distribution component 2, which improves space utilization of a region above the battery pack 100.

The power distribution component 2 integrates a plurality of functional modules. The functional modules are typically constructed as standard components. Therefore, the power distribution component 2 composed of the plurality of functional components needs to occupy specified space in the battery pack 100. In this application, a length L1 of the power distribution component 2 is constructed to be greater than or equal to half a length of the battery pack 100, so that a dimension occupied by the power distribution component 2 in the vertical direction can be saved, and therefore a height dimension of the battery pack 100 and height space occupied by the power distribution component 2 in the vehicle body can be reduced.

Because the functional modules in the power distribution component 2 are constructed as the standard components, a volume of the power distribution component 2 remains constant when the functional modules in the power distribution component 2 are identical. In this application, the length dimension of the protrusion portion 321 in the second direction is increased, so that arrangement space of the power distribution component 2 in the second direction is increased, and an overall height dimension of the power distribution component 2 in the vertical direction can be reduced. Therefore, the height dimension of the protrusion portion 321 can be adaptively reduced, and height space occupied by the protrusion portion 321 can be reduced. When the battery pack 100 is applied to a vehicle, the battery pack 100 is arranged in a region at a lower portion of a vehicle body, and the protrusion portion 321 corresponds to a region close to an armrest box of the vehicle. Through design of a dimension of the protrusion portion 321, height space occupied by the battery pack in the vehicle body can be reduced, which facilitates arrangement of the battery pack 100.

In a related technology, an improper arrangement position of a power distribution component 2 in a battery pack 100 affects assembly of the battery pack 100, resulting in the battery pack 100 being unable to fully match a vehicle body and affecting space utilization of a vehicle.

In this application, through analysis on a vehicle body structure of the vehicle, the power distribution component 2 is mounted above the tray 31, which fully utilizes the spare space of the vehicle, improves space utilization of the battery pack 100 in the vertical direction, ensures arrangement of the batteries 1 in the tray 31, and allows more batteries 1 to be arranged in the saved space, and therefore energy storage effect of the battery pack 100 is improved. In addition, by arranging the power distribution component 2 with a longer dimension in the length direction (namely satisfying L1≥1/2L2) to reduce a dimension of the power distribution component 2 in the vertical direction, a larger Z-direction spacing is caused between the protrusion portion 321 of the battery pack 100 and the vehicle body. This improves safety, and enhances passenger experience.

In some embodiments of this application, the power distribution component 2 is disposed at a middle portion of the battery pack 100 in the first direction, so that the power distribution component 2 is arranged in a region corresponding to the second cavity 302.

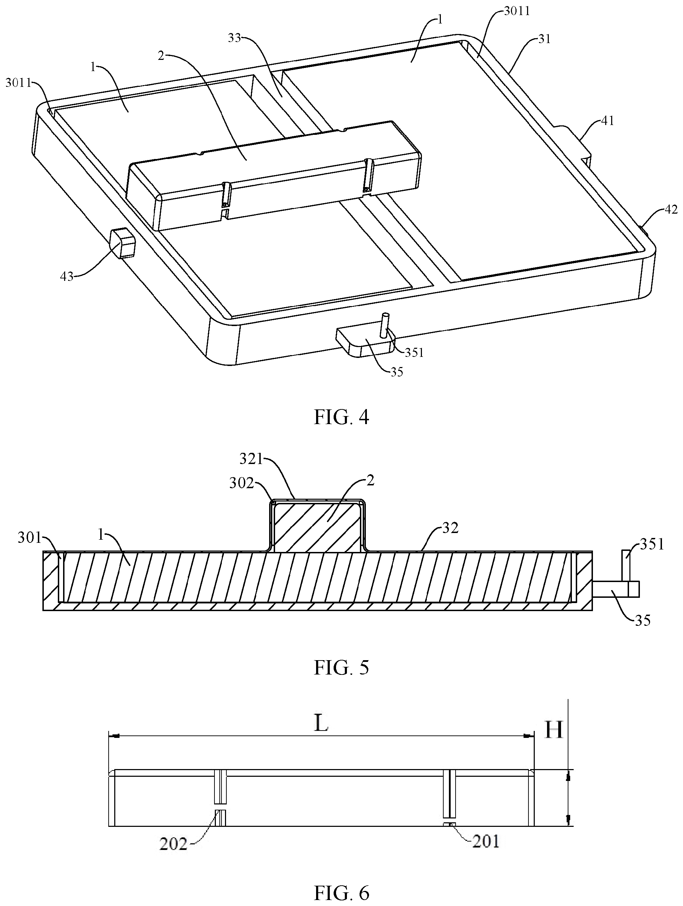

As shown in FIG. 4, in some embodiments of this application, the battery pack 100 further includes: a partition beam 33 and a pressure plate. The partition beam 33 is disposed in the first cavity 301 and partitions the first cavity 301 into two adjacent sub-cavities 3011. Each sub-cavity 3011 is configured to arrange the batteries 1. The partition beam 33 is configured to mount the power distribution component 2. The pressure plate is connected to the tray 31 and is disposed above the batteries 1. The pressure plate is configured to constrain the batteries 1 and support the power distribution component 2.

Refer to FIG. 4. The partition beam 33 is disposed to extend along the first direction and partitions the first cavity 301 into two sub-cavities 3011 spaced apart in the second direction. Each sub-cavity 3011 is configured to arrange the batteries 1. When the battery 1 is a cuboid, the plurality of batteries 1 can be sequentially arranged in the sub-cavity 3011 in the second direction or the first direction.

In addition, the pressure plate is disposed above the batteries 1. The pressure plate is configured to constrain upper surfaces of the batteries 1, to improve assembly reliability of the batteries 1 in the tray 31. Accordingly, each sub-cavity 3011 is provided with a pressure plate.

The power distribution component 2 is disposed on a side surface (namely an upper surface) that is of the pressure plate and that is away from the batteries 1 to support the power distribution component 2.

In some embodiments of this application, the partition beam 33 extends along the first direction and is disposed at a middle portion of the first cavity 301 in the second direction. The partition beam 33 is provided with a first mounting portion. The pressure plate is provided with a second mounting portion. The first mounting portion and the second mounting portion are separately configured to mount the power distribution component 2, to fasten the power distribution component 2. This improves assembly reliability of the power distribution component 2 in the battery pack 100.

Refer to FIG. 3. A distance between the first mounting portion and the second mounting portion in the second direction is L3, and a length dimension of the power distribution component 2 in the second direction is L, satisfying a relational expression: 2/3L≤L3<L. Therefore, mounting reliability of the power distribution component 2 can be improved.

The partition beam 33 and the pressure plate are provided with mounting structures (namely the first mounting portion and the second mounting portion) for mounting the power distribution component 2. Correspondingly, the power distribution component 2 is also provided with mounting structures (such as mounting holes) that are respectively connected to and cooperate with the first mounting portion and the second mounting portion. A distance between the two mounting structures is kept within the foregoing parameter range, to ensure assembly and fastening effect of the power distribution component 2.

Refer to FIG. 3. L3 is a distance between a center of the first mounting portion and a center of the second mounting portion, and L3 may be subjected to a measurement error in actual measurement.

In some embodiments of this application, the power distribution component 2 is separately provided with a first fastening portion 201 and a second fastening portion 202 on two sides in the first direction. The first fastening portion 201 is connected to the partition beam 33. The second fastening portion 202 is connected to the pressure plate. A distance between the first fastening portion 201 and the second fastening portion 202 in the second direction is L4, and a length dimension of the power distribution component 2 in the second direction is L, satisfying a relational expression: 2/3L≤L4<L.

In other words, the first fastening portion 201 may be connected to and cooperate with the foregoing first mounting portion, and the second fastening portion 202 may be fastened to and cooperate with the foregoing second connecting portion.

Preferable arrangement positions of the first fastening portion 201 and the second fastening portion 202 are centers of gravity of the power distribution component 2.

Refer to FIG. 3. L4 is a distance between a center of the first fastening portion 201 (a mounting hole structure) and a center of the second fastening portion 202 (a mounting hole structure), and L4 may have a measurement error in actual measurement. In addition, when L3 and L4 are measured in a same manner, L3=L4.

In some specific embodiments of this application, the first fastening portion 201 and the second fastening portion 202 are constructed as hole structures. Correspondingly, the first mounting portion and the second mounting portion are constructed as mounting bases or mounting posts. Taking the mounting post as an example, the mounting post can be provided with a threaded hole that corresponds to the hole structure. The threaded hole is disposed to be opposite to the second fastening portion 202 that is constructed as the hole structure. The mounting post is threadedly engaged with the threaded hole through a threaded connector. This implements assembly of the power distribution component 2 and the partition beam 33 (or the pressure plate), and ensures that the battery pack 100 is protected against safety defects such as mounting displacement and loosening under vibration impact.

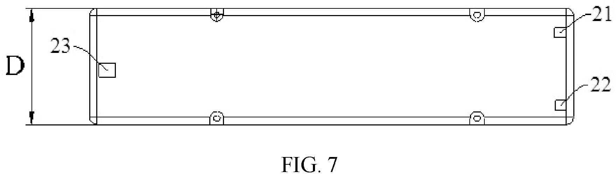

Refer to FIG. 7. The first fastening portion 201 and the second fastening portion 202 are spaced apart along the second direction, and both the first fastening portion 201 and the second fastening portion 202 are constructed as two. The two first fastening portions 201 are respectively arranged on two sides of the power distribution component 2 in the first direction, and the two second fastening portions 202 are also respectively arranged on two sides of the power distribution component 2 in the first direction, to form symmetrical mounting points on the power distribution component 2, and therefore assembly stability and reliability of the power distribution component 2 are improved.

Specific structures of the first mounting portion, the second mounting portion, the first fastening portion 201 and the second fastening portion 202 are not limited thereto, and other connection manners such as an inserted connection and a snap-fit connection can also be used. This application limits a ratio of a distance between the mounting structures to a dimension of the power distribution component 2, to place the mounting point at a center of gravity of the power distribution component 2, and therefore assembly reliability of the power distribution component 2 is improved.

In some embodiments of this application, 350 mm≤L4≤400 mm. A dimension of the power distribution component 2 in the first direction usually ranges from 620 mm to 640 mm. When L4 satisfies the foregoing parameter range, the two mounting portions can be designed at centers of mass concentration of the power distribution component 2, to improve assembly reliability of the power distribution component 2.

As shown in FIG. 6 and FIG. 7, in some embodiments of this application, a length dimension of the power distribution component 2 in the second direction is L, satisfying a relational expression: 620 mm≤L≤640 mm. A width dimension of the power distribution component 2 in the first direction is D, satisfying a relational expression: 120 mm≤D≤155 mm. A height dimension of the power distribution component 2 in the third direction is H, satisfying a relational expression: 80 mm≤H≤85 mm.

The foregoing parameter ranges refer to the length dimension, the width dimension, and the height dimension of the power distribution component 2, and at least one of dimensions of the power distribution component 2 satisfies the corresponding foregoing parameter range, so that the power distribution component 2 is constructed as a compact electrical device. Therefore, electrical components such as a main positive/main negative relay, a fast charge positive and negative relay, a pre-charge relay, a pre-charge resistor, a smart fuse, a Hall effect sensor, a main fuse, a high-voltage monitoring module, and a controller can be disposed in limited space. A height dimension H of the protrusion portion 321 ranges from 80 mm to 85 mm. A dimension of the protrusion portion 321 in the vertical direction is small. When the battery pack 100 is applied to a vehicle, the protrusion portion 321 can be adapted to a vehicle body floor.

In some embodiments of this application, a length dimension of the power distribution component 2 in the second direction is L, a width dimension of the power distribution component 2 in the first direction is D, and a height dimension of the power distribution component 2 in the third direction is H, satisfying at least one of the following relational expressions: 3≤L/D≤6, 1≤D/H≤2, and 6≤L/H≤8.

At least one of the length dimension, the width dimension and the height dimension of the power distribution component 2 can satisfy the corresponding foregoing parameter range, so that a requirement of arranging a plurality of electrical components in limited space can be met.

In a specific embodiment of this application, the length dimension L, the width dimension D, and the height dimension H of the power distribution component 2 satisfy a relational expression: L/D/H=7:2:1, so that the power distribution component 2 is constructed as a roughly cuboid structure with a reasonable dimensional ratio, which facilitates design of fixed mounting points based on the center of gravity of the power distribution box.

The ratio of the length, the width and the height of the power distribution component 2 is not limited thereto. A specified error may exist based on the foregoing ratio (namely 7:2:1), provided that the foregoing ratio is roughly met.

In some embodiments of this application, the battery pack 100 further includes a plurality of lifting lugs 35. The plurality of lifting lugs 35 are respectively disposed on outer wall surfaces of two sides of the tray 31 in the first direction, and the lifting lugs 35 are configured to connect to the vehicle body to fasten the battery pack 100 to the vehicle body.

Refer to FIG. 1 and FIG. 2. Only one of the plurality of lifting lugs 35 is shown in the figures. The lifting lugs 35 have a same structure, and the plurality of lifting lugs 35 located on the outer wall surface of the same side of the tray 31 can be sequentially arranged at intervals in the second direction to form a plurality of mounting points on the tray 31, thereby improving connection reliability between the battery pack 100 and the vehicle body.

In an embodiment of this application, at least one of the plurality of lifting lugs 35 on each of two sides of the tray 31 in the first direction is provided with a positioning post 351. The positioning post 351 is configured to position with the vehicle body, so that the battery pack 100 can be positioned and assembly difficulty of the battery pack 100 can be reduced.

Refer to FIG. 1. The positioning post 351 is disposed on an upper surface of the lifting lug 35 and extends upward in the vertical direction. Therefore, when being hoisted and mounted, the battery pack 100 can be first positioned with the mounting component (such as the vehicle body) through the positioning post 351, to improve assembly efficiency of the battery pack 100.

As shown in FIG. 3, in some embodiments of this application, a vertical distance between a central line of the power distribution component 2 in the first direction and the lifting lug 35 is L5, satisfying a relational expression: 500 mm≤L5≤550 mm. Therefore, when the battery pack 100 is applied to the vehicle, the power distribution component 2 can be arranged at a middle portion of the vehicle body in the width direction, corresponding to a position of armrest space in the vehicle. This ensures adaptation effect of the battery pack 100 to the vehicle body, prevents irregular protrusions on a vehicle body floor due to adaption of the vehicle body to the battery pack 100, and improves riding experience of a driver and a passenger.

In some other embodiments of this application, in the first direction, a minimum distance between the lifting lug 35 and the power distribution component 2 is L6, satisfying a relational expression: 470 mm≤L6≤480 mm.

"L5" and "L6" can simultaneously satisfy the foregoing parameter ranges, which can effectively avoid interference between the positioning post 351 and the upper cover 32, and ensure connection effect between the tray 31 and the upper cover 32.

As shown in FIG. 3, in some embodiments of this application, the battery pack 100 is provided with a direct current fast charge port 41. The power distribution component 2 is provided with a fast charge circuit mounting portion 21. The direct current fast charge port 41 and the fast charge circuit mounting portion 21 are arranged opposite to each other, and a distance between the two is L7, satisfying a relational expression: 400 mm≤L7≤450 mm.

Refer to FIG. 1. The direct current fast charge port 41 is disposed at a rear end of the battery pack 100 and is located at a middle portion of the rear end of the battery pack 100 (namely a middle region in the first direction), so that the fast charge circuit mounting portion 21 is positioned opposite to the direct current fast charge port 41, which shortens a distance between the fast charge circuit mounting portion 21 and the direct current fast charge port 41, and facilitates a connection of the fast charge circuit mounting portion 21 to the direct current fast charge port 41. Therefore, a copper busbar in the battery pack 100 is arranged in a reasonable manner, which significantly reduces a distance between the mounting portion of the power distribution component 2 and a connection port on the tray 31, reduces a length of the copper busbar in the battery pack 100, saves costs, and improves safety performance of the battery pack 100.

Refer to FIG. 3. L7 is measured as a minimum distance from an edge of the direct current fast charge port 41 to an edge of the fast charge circuit mounting portion 21. Because the direct current fast charge port 41 is positioned opposite to the fast charge circuit mounting portion 21, L7 is also a distance between the direct current fast charge port 41 and an edge of the fast charge circuit mounting portion 21 in the second direction, and L7 may have a measurement error in actual measurement.

In some embodiments of this application, the battery pack 100 is provided with a load discharge port 42. The power distribution component 2 is provided with a load circuit mounting portion 22. A distance between the load discharge port 42 and the load circuit mounting portion 22 in the second direction is L8, satisfying a relational expression: 400 mm≤L8≤450 mm.

Refer to FIG. 1. The load discharge port 42 is located at the rear end of the battery pack 100, and the load discharge port 42 and the direct current fast charge port 41 are spaced apart in the first direction. The load circuit mounting portion 22 on the power distribution component 2 may be connected to the load discharge port 42 through a wire harness.

Refer to FIG. 3. L8 is measured as a vertical distance from an edge of the load discharge port 42 to an edge of the load circuit mounting portion 22 in the second direction, and L8 may have a measurement error in actual measurement.

Refer to FIG. 3. Both the load circuit mounting portion 22 and the fast charge circuit mounting portion 21 are arranged on a same side of the power distribution component 2 (namely a side close to the load discharge port 42 and the direct current fast charge port 41, which is also the rear side of the battery pack 100), which can shorten a distance between the mounting portion of the power distribution component 2 and the connection port on the tray 31, reduce a length of a connecting component (such as a copper busbar, and a wire harnesses) in the battery pack 100, save costs, and improve safety performance of the battery pack 100.

Because the load circuit mounting portion 22 and the fast charge circuit mounting portion 21 are arranged close to each other, a distance between the direct current fast charge port 41 and the fast charge circuit mounting portion 21 (namely L7) is close to or the same as a distance between the load discharge port 42 and the load circuit mounting portion 22 in the second direction (namely L8).

In some embodiments of this application, the battery pack 100 is provided with a discharge port 43. The power distribution component 2 is provided with a discharge circuit mounting portion 23. A distance between the discharge port 43 and the discharge circuit mounting portion 23 in the second direction is L9, satisfying a relational expression: 25 mm≤L9≤50 mm.

Refer to FIG. 1. The discharge port 43 of the battery pack 100 is disposed at a front end of the battery pack 100, and the discharge circuit mounting portion 23 in the power distribution component 2 is disposed close to the front end of the battery pack 100, so that a distance between the discharge port 43 and the discharge circuit mounting portion 23 can be shortened, which facilitates an electrical connection of the discharge circuit mounting portion 23 to the discharge port 43.

In this application, arrangement positions of the mounting portions (such as the fast charge circuit mounting portion 21, the load circuit mounting portion 22, and the discharge circuit mounting portion 23) in the power distribution component 2 are designed to effectively shorten a distance between the mounting portion and the connection port (such as the direct current fast charge port 41, the load discharge port 42, or the discharge port 43) on the tray 31, so that an arrangement length of the connecting component in the battery pack 100 can be shortened and costs can be lowered.

Refer to FIG. 3. L9 is measured as a minimum distance from an edge of the discharge port 43 to an edge of the discharge circuit mounting portion 23, and L9 may have a measurement error in actual measurement.

The direct current fast charge port 41, the load discharge port 42, and the discharge port 43 of the battery pack 100 are formed on a side wall of the tray 31. The foregoing ports are respectively located on side walls of the tray 31 in a front-rear direction.

As shown in FIG. 5, in some embodiments of this application, the power distribution component 2 is in clearance fit with an inner wall of the protrusion portion 321, and a clearance dimension ranges from 3 mm to 5 mm, so that an assembly clearance can be reserved between the power distribution component 2 and the inner wall of the protrusion portion 321, which avoids problems such as squeezing or bumping between the power distribution component 2 and the upper cover 32, and improves assembly reliability of the power distribution component 2 in the battery pack 100.

Refer to FIG. 5. A clearance between the power distribution component 2 and the inner wall of the protrusion portion 321 is a minimum mounting clearance between the appearance of the power distribution component 2 and the inner wall in the second direction, the first direction, and the third direction. When the clearance dimension satisfies the foregoing parameter range, a reasonable assembly clearance can be reserved.

In some embodiments of this application, the power distribution component 2 includes: a DC module, where the DC module is provided with a fast charge circuit mounting portion 21, and the DC module is disposed on a side that is of the power distribution component 2 and that is close to the direct current fast charge port 41, and opposite to the direct current fast charge port 41; a CCU module, where the CCU module is disposed close to the DC module and provided with a load circuit mounting portion 22, and the CCU module is located on a side that is of the power distribution component 2 and that is close to the load discharge port 42; and an FMCU module, where the FMCU module is provided with a discharge circuit mounting portion 23, and the FMCU module is disposed on a side that is of the power distribution component 2 and that is close to the discharge port 43, and is disposed opposite to the discharge port 43.

The power distribution component 2 has a plurality of functional modules (such as the foregoing DC module, the foregoing FMCU module and the foregoing CCU module), and the plurality of functional modules (the mounting portions in the functional modules) can be electrically connected to ports arranged on the tray 31 through electrical connectors such as copper busbars or wire harnesses.

Refer to FIG. 3. In this application, the DC module is disposed opposite to the direct current fast charge port 41, and arranged on the side that is of the power distribution component 2 and that is close to the direct current fast charge port 41, so that a distance between the direct current fast charge port 41 and the fast charge circuit mounting portion 21 can be significantly reduced. The CCU module is arranged on the side that is of the power distribution component 2 and that is close to the load discharge port 42, so that a distance between the load discharge port 42 and the load circuit mounting portion 22 can be significantly reduced. The FMCU module is arranged on the side that is of the power distribution component 2 and that is close to the discharge port 43, so that a distance between the discharge port 43 and the discharge circuit mounting portion 23 can be significantly reduced. Therefore, arrangement difficulty of the electrical connectors can be reduced.

Because the load discharge port 42 and the direct current fast charge port 41 are arranged on a same side of the tray 31, the DC module and the CCU module can be arranged close to each other, so that the functional modules of the power distribution component 2 are arranged in a compact and reasonable manner.

The fast charge circuit mounting portion 21 may be an interface of the DC module, the load circuit mounting portion 22 may be an interface of the CCU module, the discharge circuit mounting portion 23 may be a structure of the FMCU module, and the foregoing interfaces are separately configured to connect to electrical connectors such as copper busbars or wire harnesses.

An electric apparatus according to an embodiment of this application includes the foregoing battery pack 100. Through arrangement of the battery pack 100, space of the electric apparatus (such as a vehicle) can be effectively utilized. In addition, a structure and dimensions of the power distribution component 2 in the battery pack 100 are designed in a reasonable manner, enhancing assembly reliability of the power distribution component 2 in the battery pack 100, and facilitating connection and cooperation between the power distribution component 2 and the plurality of connection ports of the battery pack 100.

In the descriptions of this application, it should be understood that orientations or positional relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential", and the like are orientations or positional relationships as shown in the accompanying drawings, and are only for the purpose of facilitating and simplifying the descriptions of this application instead of indicating or implying that apparatuses or elements indicated must have particular orientations, and be constructed and operated in the particular orientations, so that these terms are not construed as limiting This application.

In description of this application, a "first feature" or a "second feature" may include one or more such features.

In description of this application, "a plurality of" means two or more.

In description of this application, the first feature beings "above" or "below" the second feature may include that the first feature is in direct contact with the second feature, or may include that the first feature and second feature are not in direct contact but are in contact via another feature between them.

In description of this application, the first feature being "over", "above", or "on" the second feature may include that the first feature is directly above or diagonally above the second feature, or simply means that the first feature has a higher horizontal height than the second feature.

In the description of this specification, descriptions referring to the terms "one embodiment", "some embodiments", "exemplary embodiments", "examples", "specific examples" or "some examples" mean that specific features, structures, materials or characteristics described in connection with this embodiment or example are included in at least one embodiment or example of this application. In this specification, the schematic representations of the foregoing terms are not necessarily aimed at the same embodiment or example. Moreover, specific features, structures, materials or characteristics described may be combined in any one or more embodiments or examples in a suitable manner.

Although the embodiments of this application have been shown and described, persons of ordinary skill in the art can understand that many changes, modifications, substitutions and variations can be made to these embodiments without departing from the principles and purposes of this application, and the scope of this application is defined by the claims and their equivalents.

## Claims

1. A battery pack, comprising:
a battery (1) and a power distribution component (2);
a tray (31), wherein the tray (31) is provided with a first cavity (301) having an open end, and the battery (1) is disposed in the first cavity (301); and
an upper cover (32), wherein the upper cover (32) covers the tray (31), in a first direction, the upper cover (32) is provided with a protrusion portion (321) that upwardly protrudes and extends in a second direction, the protrusion portion (321) is provided with a second cavity (302) in communication with the first cavity (301), the power distribution component (2) is disposed in the second cavity (302), a length dimension of the protrusion portion (321) in the second direction is L1, and a length direction of the battery pack in the second direction is L2, satisfying a relational expression: L1≥1/2L2.

2. The battery pack according to claim 1, wherein the battery pack comprises:
a partition beam (33), wherein the partition beam (33) is disposed in the first cavity (301) and partitions the first cavity (301) into two adjacent sub-cavities (3011), each sub-cavity (3011) is configured to arrange the battery (1), and the partition beam (33) is configured to mount the power distribution component (2); and
a pressure plate, wherein the pressure plate is connected to the tray (31) and disposed above the battery (1), and the pressure plate is configured to constrain the battery (1) and support the power distribution component (2).

3. The battery pack according to claim 2, wherein the partition beam (33) extends along the first direction and is disposed at a middle portion of the first cavity (301) in the second direction, the partition beam (33) is provided with a first mounting portion, the pressure plate is provided with a second mounting portion, and the first mounting portion and the second mounting portion are separately configured to mount the power distribution component (2), wherein
a distance between the first mounting portion and the second mounting portion in the second direction is L3, and a length dimension of the power distribution component (2) in the second direction is L, satisfying a relational expression: 2/3L≤L3<L.

4. The battery pack according to claim 2 or 3, wherein the power distribution component (2) is provided with a first fastening portion (201) and a second fastening portion (202) on two sides in the first direction, the first fastening portion (201) is connected to the partition beam (33), the second fastening portion (202) is connected to the pressure plate, a distance between the first fastening portion (201) and the second fastening portion (202) in the second direction is L4, and a length dimension of the power distribution component (2) in the second direction is L, satisfying a relational expression: 2/3L≤L4<L.

5. The battery pack according to claim 4, wherein 350 mm≤L4≤400 mm.

6. The battery pack according to any one of claims 1 to 5, wherein a length dimension of the power distribution component (2) in the second direction is L, satisfying a relational expression: 620 mm≤L≤640 mm; and/or
a width dimension of the power distribution component (2) in the first direction is D, satisfying a relational expression: 120 mm≤D≤155 mm; and/or
a height dimension of the power distribution component (2) in a third direction is H, satisfying a relational expression: 80 mm≤H≤85 mm.

7. The battery pack according to any one of claims 1 to 6, wherein the length dimension of the power distribution component (2) in the second direction is L, the width dimension of the power distribution component (2) in the first direction is D, and the height dimension of the power distribution component (2) in the third direction is H, satisfying at least one of the following relational expressions: 3≤L/D≤6, 1≤D/H≤2, and 6≤L/H≤8.

8. The battery pack according to any one of claims 1 to 7, wherein the tray (31) further comprises a plurality of lifting lugs (35), the plurality of lifting lugs (35) are separately disposed on outer wall surfaces of two sides of the tray (31) in the first direction, and the lifting lugs (35) are configured to connect to a vehicle body.

9. The battery pack according to claim 8, wherein at least one of the plurality of lifting lugs (35) on each of the two sides of the tray (31) in the first direction is provided with a positioning post (351), and the positioning post (351) is configured to position with the vehicle body.

10. The battery pack according to claim 8 or 9, wherein a vertical distance between a central line of the power distribution component (2) in the first direction and the lifting lug (35) is L5, satisfying a relational expression: 500 mm≤L5≤550 mm; and/or
in the first direction, a minimum distance from the lifting lug (35) to the power distribution component (2) is L6, satisfying a relational expression: 450 mm≤L6≤480 mm.

11. The battery pack according to any one of claims 1 to 10, wherein the battery pack is provided with a direct current fast charge port (41), the power distribution component (2) comprises a DC module, the DC module is provided with a fast charge circuit mounting portion (21), the DC module is disposed on a side that is of the power distribution component (2) and that is close to the direct current fast charge port (41), and is disposed opposite to the direct current fast charge port (41), the direct current fast charge port (41) is disposed opposite to the fast charge circuit mounting portion (21), and a distance between the two is L7, satisfying a relational expression: 400 mm≤L7≤450 mm.

12. The battery pack according to any one of claims 1 to 11, wherein the battery pack is provided with a load discharge port (42), the power distribution component (2) comprises a CCU module, the CCU module is provided with a load circuit mounting portion (22), the CCU module is disposed on a side that is of the power distribution component (2) of a power distribution box and that is close to the load discharge port (42), and a distance between the load discharge port (42) and the load circuit mounting portion (22) in the second direction is L8, satisfying a relational expression: 400 mm≤L8≤450 mm.

13. The battery pack according to any one of claims 1 to 12, wherein the battery pack is provided with a discharge port (43), the power distribution component (2) is provided with an FMCU module, the FMCU module is provided with the discharge circuit mounting portion (23), the FMCU module is disposed on a side that is of the power distribution component (2) and that is close to the discharge port (43), and is disposed opposite to the discharge port (43), and a distance between the discharge port (43) and the discharge circuit mounting portion (23) in the second direction is L9, satisfying a relational expression: 25 mm≤L9≤50 mm.

14. The battery pack according to any one of claims 1 to 13, wherein the power distribution component (2) is in clearance fit with an inner wall of the protrusion portion (321), and a clearance dimension ranges from 3 mm to 5 mm.

15. The battery pack according to claim 1, wherein in a projection of a bottom surface of the tray, minimum distances between the power distribution component (2) and edges on a same side of the tray in the first direction are L10 and L11, and a dimension of the power distribution component (2) in the first direction is D, satisfying at least one of the following relational expressions: 440 mm≤L10≤490 mm, 440 mm≤L11≤490 mm, and 120 mm≤D≤155 mm.

16. The battery pack according to claim 15, wherein L10=L11.

17. An electric apparatus, comprising the battery pack according to any one of claims 1 to 16.

18. The electric apparatus according to claim 17, wherein the electric apparatus is a vehicle, the battery pack is mounted on a vehicle body, and the vehicle body is provided with upwardly recessed vacant space, the protrusion portion corresponds to the vacant space, and at least a part of the protrusion portion is disposed in the vacant space.
